# EUROPÄISCHE PATENTSCHRIFT

(11) **EP 3 584 559 B1**
(45) Veröffentlichungstag und Bekanntmachung des Hinweises auf die Patenterteilung: **06.03.2024**
(21) Anmeldenummer: 19185665.7
(22) Anmeldetag: 24.10.2014
(51) Int. Cl.: G01N 3/58, E01C 23/088

(54) **VERSCHLEISSPROGNOSEVERFAHREN FÜR EINE BODENBEARBEITUNGSMASCHINE**
WEAR FORECAST METHOD FOR A GROUND WORKING MACHINE
PROCÉDÉ DE PRONOSTIC D'USURE POUR UNE MACHINE DE TRAVAIL DE SOLS

(30) Priorität: 25.11.2013 DE 102013112972
(43) Veröffentlichungstag der Anmeldung: 25.12.2019
(62) Teilanmeldung aus: 14190286.6
(73) Patentinhaber: Wirtgen GmbH, 53578 Windhagen (DE)
(72) Erfinder: PAULSEN, Sven, 56656 Brohl-Lützing (DE); WAGNER, Stefan, 53604 Bad Honnef (DE); BARIMANI, Cyrus, 53639 Königswinter (DE); HÄHN, Günter, 53639 Königswinter (DE)
(74) Vertreter: Herrmann, Jochen

(56) Entgegenhaltungen:
- DE-A1-102008 045 470
- DE-A1-102010 014 903
- US-A1- 2013 035 874

## Beschreibung

Beim Ausbau von Straßen mittels Fräsen sowie bei Abbau von Lagerstätten mittels Surface Miner ebenfalls durch Fräsen unterliegen die eingesetzten Bodenbearbeitungswerkzeuge und dabei insbesondere die Fräsmeißel einem kontinuierlichen Verschleißprozess. Erreichen die Werkzeuge einen bestimmten Verschleißzustand, ist ein Austausch zweckmäßig, da sonst der weitere Prozess an Effizienz (Wirkungsgrad) verliert. Dabei müssen verschiedene Verschleißzustände unterschieden werden, die zum Austausch eines Fräsmeißels bzw. Meißelhalters führen:
1. Austausch des Meißels, da nicht mehr genügend Verschleißmaterial (insbesondere Hartmetall in der Spitze) vorhanden ist. Der Eindringwiderstand wird zu groß und damit nimmt der Wirkungsgrad ab (zu viel Reibungsverlust), der Verschleiß ist hauptsächlich rotationssymmetrisch.
2. Austausch des Meißelhalters, da die Verschleißgrenze erreicht ist (zwischen Meißel und Halter kommt es an der Kontaktfläche zu Verschleiß des Halters). Dieser Verschleiß ist üblicherweise symmetrisch.
3. Nicht rotationssymmetrischer Verschleiß der Meißelspitze und/oder des Meißelkopfes durch unzureichende Drehbewegung des Meißels während des Fräsprozesses. Die Folgen sind ein schlechtes Fräsbild sowie die Gefahr eines Werkzeugbruches, da die stützende Wirkung des Meißelkopfes verloren geht.
4. Der Meißelhalter kann darüber hinaus noch zusätzlichem, nicht rotationssymmetrischem Verschleiß unterliegen.
5. Meißelbruch.

Darüber hinaus kann es bei verschlissenen und/oder gebrochenen Meißeln zu Sekundärschäden an den Meißelhaltern beziehungsweise bei verschlissenen Meißelhaltern zu Sekundärschäden an der Fräswalze kommen. Ein rechtzeitiger Austausch der Meißel und/oder der Meißelhalter ist daher notwendig und spart Kosten. Werden die Meißel und/oder Meißelhalter hingegen zu früh gewechselt, wird ebenfalls nicht kostenoptimal gearbeitet, da die Meißel und Meißelhalter als Verschleißteil sehr kostenintensiv sind. Noch vorhandenes Verschleißpotential wird dann nicht richtig ausgenutzt. Bis dato wird der Verschleißzustand der Meißel und Meißelhalter durch visuelle Kontrolle des Maschinenfahrers beurteilt. Der Maschinenführer muss dazu die Maschine abstellen (Motor ausschalten und Walze vom Antriebsstrang entkoppeln). Er muss sodann die hintere Walzenklappe öffnen, um so die Fräswalze visuell zu inspizieren.

Die Fräswalze wird dann mittels eines zweiten Antriebes gedreht, um die komplette Fräswalze inspizieren zu können. Die Aufgabe der Walzeninspektion kann auch von einem zweiten Bedienmann übernommen werden. Der Verschleißzustand der Meißelhalter wird dabei üblicherweise über so genannte Verschleißmarkierungen beurteilt. Der Verschleißzustand der Meißel über Längenverschleiß und Rotationssymmetrie des Verschleißbildes.

Die Kontrolle des Verschleißzustandes von Meißel und Halter ist sehr zeitintensiv und da in dieser Zeit nicht produziert werden kann, unproduktiv. Der Gesamtprozess wird gestört und damit die Verfügbarkeit zusätzlich vermindert. Zudem besteht die Gefahr aufgrund der stark subjektiv geprägten Beurteilung, dass das Verschleißpotential von Halter und Meißel nicht optimal genutzt wird.

Aus der DE 102 03 732 A1 ist eine Vorrichtung bekannt, bei der durch Überwachung von Betriebszuständen von Maschinenbauteilen die direkt oder indirekt am Fräsprozess beteiligt sind, der Betrieb optimiert werden kann. So wird unter anderem auch der Verschleißzustand der Meißel durch Auswertung diverser Maschinenparameter und Kenngrößen beurteilt. Während des Betriebes der Fräsmaschine besteht das Problem, dass der Fräsprozess bzw. der von seinen Eigenschaften stark schwankende Untergrund selbst auf die Auswertung des Betriebszustandes von Bauteilen großen Einfluss hat.

Aus der AT 382 683 B ist eine Bergbaumaschine bekannt, bei der die Schrämwalze berührungslos überwacht wird. Dabei werden Lichtschranken verwendet, die die Anwesenheit der Meißel erkennen. Eine quantitative Verschleißsauwertung ist mit diesem Verfahren nicht möglich.

Aus der DE 10 2008 045 470 A1 ist ein Verfahren zur quantitativen Verschleißbestimmung bekannt. Dabei wird die Position wenigstens eines Punktes des Bodenbearbeitungswerkzeuges im Raum erfasst. Dieses Messergebnis wird dann mit einem Referenzwert verglichen um den Verschleiß des Werkzeuges quantitativ zu erfassen.

Wie bereits vorstehend erwähnt wurde, wechseln während des Arbeitsprozesses die Materialeigenschaften des zu bearbeitenden Untergrundes. Beispielsweise kann es im Bergbau vorkommen, dass beim Überfahren eines abzutragenden Rohstoffvorkommens die Härte des Rohstoffmaterials plötzlich ansteigt (Hard-Spot). Dann tritt an den Werkzeugen verstärkt Verschleiß auf.

Um nun eine Beschädigung des Schneidegeräts aufgrund der Unvorhersehbarkeit der Arbeitsbedingungen zu vermeiden, werden aus Sicherheitsgründen die Werkzeuge mitunter zu früh gewechselt.

US 2013/0035874 A1 offenbart ein Verfahren zur Verschleißprognose für eine Straßenfräsmaschine. Dabei wird ein Aufnahmegerät zur Erfassung des aktuellen Verschleißzustands eines Meißels verwendet, welches ein Foto von einzelnen Meißeln der Straßenfräsmaschine aufnimmt. Dem Meißel ist auch ein Transmitter zugeordnet, welcher eine individuelle Kennung des Meißels aussendet. Auch diese Kennung kann von dem Aufnahmegerät erfasst werden. Aufgrund des aufgenommenen Fotos kann ein Rückschluss auf die verbleibende Lebensdauer des Meißels gezogen werden.

Es ist Aufgabe der Erfindung, ein Verfahren bereitzustellen, mit dem ein wirtschaftlich optimierter Bearbeitungsprozess möglich ist.

Diese Aufgabe der Erfindung wird mit den Merkmalen des Anspruchs 1 gelöst.

Erfindungsgemäß wird der aktuelle Verschleißzustand wenigstens eines Bodenbearbeitungswerkzeuges, insbesondere eines Meißels und/oder eines Meißelhalters erfasst. Dies kann beispielsweise mit dem Verfahren gemäß der vorbeschriebenen DE 10 2008 045 470 A1 vorgenommen werden. Aus dem so erhaltenen Zwischenergebnis wird dann gemäß der Erfindung in einem weiteren Verfahrensschritt die Restverschleißkapazität bis zum Erreichen einer vorgegebenen Verschleißgrenze ermittelt. Mithin wird also ein Verschleißzustand definiert, bei dem das Bodenbearbeitungswerkzeug ausgetauscht werden muss. Unter Einbeziehung beispielsweise der örtlichen Gegebenheiten, lässt sich dann beispielsweise die konkrete Reststandzeit des Bodenbearbeitungswerkzeuges ermitteln. Dies führt zu einem optimierten Bearbeitungsprozess. Insbesondere kann nunmehr dem Maschinenführer eine konkrete Information an die Hand gegeben werden, die ihm einen Aufschluss über die Restverschleißkapazität des Bodenbearbeitungswerkzeuges gibt. Hierdurch wird vermieden, dass kein rechtzeitiger Wechsel des Bodenbearbeitungswerkzeugs versäumt, oder ein zu früher Wechsel des Bodenbearbeitungswerkzeuges mit den damit verbundenen wirtschaftlichen Nachteilen vorgenommen wird.

Anhand wenigstens eines Kennwertes wird die verbleibende Arbeitsleistung der Bodenbearbeitungsmaschine ermittelt, bis die Verschleißgrenze des Bodenbearbeitungswerkzeuges erreicht ist. Als verbleibende Arbeitsleistung kann beispielsweise die Fräsleistung, insbesondere die Masse des noch fräsbaren Materials und/oder das Volumen des noch fräsbaren Materials und/oder die verbleibende Strecke für die Bodenbearbeitungsmaschine oder die verbleibende Arbeitszeit für die Bodenbearbeitungsmaschine ermittelt werden. Diese Parameter geben dem Maschinenführer eine eindeutig umsetzbare Information.

Eine effektive Verschleißprognose wird dadurch generiert, dass der aktuelle Verschleißzustand des Bodenbearbeitungswerkzeuges mit einem, zumindest einen Teil des Bodenbearbeitungswerkzeuges im verschlissenen Zustand wiedergebenden Referenzwert verglichen wird um die Restverschleißkapazität zu ermitteln. Der Referenzwert kann beispielsweise eine Referenzkontur (Teilkontur oder Gesamtkontur), ein oder mehrere Referenzpunkte, ein Referenzvolumen (Teilvolumem oder Gesamtvolumen) oder die Lage oder Richtung der Mittellängsachse des Bodenbearbeitungswerkzeuges sein.

Die Sicherheit des Bearbeitungsprozesses wird noch zusätzlich dann verbessert, wenn vorgesehen ist, dass der Verschleißzustand mehrerer oder aller Bodenbearbeitungswerkzeuge der Bodenbearbeitungsmaschine ermittelt wird, und dass das die geringste Restverschleißkapazität aufweisende Bodenbearbeitungswerkzeug zur Ermittlung der verbleibenden Arbeitsleistung bis zum Erreichen der Verschleißgrenze berücksichtigt wird. Beispielsweise können einige repräsentative Bodenbearbeitungswerkzeuge ausgewählt werden um eine detaillierte Verschleißaussage treffen zu können. Wenn alle Bodenbearbeitungswerkzeuge überwacht werden, dann wird eine nahezu hundertprozentige Verschleißaussage möglich.

Ein erfindungsgemäßes Verfahren zur Verschleißprognose kann dadurch gekennzeichnet sein, dass ein Arbeitsgebiet festgelegt wird innerhalb dem zwei oder mehrere Bodenbearbeitungsmaschinen eingesetzt sind, dass von einer Bodenbearbeitungsmaschine der aktuelle Verschleißzustand wenigsten eines Bodenbearbeitungswerkzeugs ermittelt und aus der bisher erbrachten Fräsleistung dieses wenigstens einen Bodenbearbeitungswerkzeugs und dem damit korrespondierenden Verschleiß des wenigsten einen Bodenbearbeitungswerkzeugs der wenigstens eine Kennwert oder die Verrechnung des einen oder der mehreren Kennwerte abgeleitet wird. Mithin wird also ein Referenz-Arbeitsprozess durchgeführt. Dabei können beispielsweise zunächst unverschlissene Werkzeuge oder Werkzeuge, die bereits einen Teilverschleiß aufweisen, eingesetzt werden. Nun wird mit einer solchen Bearbeitungsmaschine der Bearbeitungsprozess durchgeführt. Während dieses Prozesses können dann verschiedene Parameter erfasst werden, insbesondere die erbrachte Fräsleistung ermittelt werden. Die erbrachte Fräsleistung kann beispielsweise, wie vorstehend bereits beschrieben, die Masse des gefrästen Materials, die zurückgelegte Strecke etc. sein. Durch eine Differenzanalyse zwischen dem vorher bekannten Verschleißzustand und dem nach dem Arbeitsprozess vorliegenden Verschleißzustand lässt sich nun eine Korrelation bilden. Diese sagt aus, welcher Verschleiß an den Werkzeugen bei der erbrachten Arbeitsleistung aufgetreten ist. Hieraus können dann ein oder mehrere Kennwerte abgeleitet werden. Diese Kennwerte lassen sich nun einsetzen um bei einem beliebigen Verschleißzustand (und daraus resultierender Restverschleißkapazität) die noch zu erbringende Arbeitsleistung (bis beispielsweise zum Erreichen der Verschleißgrenze) zu ermitteln.

Entsprechend können diese Kennwerte an der vorliegenden Bearbeitungsmaschine direkt ermittelt und verwendet werden oder sie können an zumindest eine weitere Bodenbearbeitungsmaschine, die insbesondere einen vergleichbaren Untergrund bearbeitet, übermittelt werden.

Erfindungsgemäß wird der wenigstens eine Kennwert unter Berücksichtigung der Materialeigenschaften, insbesondere der Abrasivität und/oder der Materialhärte des zu bearbeitenden Untergrundes ermittelt.

Hierbei kann aus Praktikabilitätsgründen der wenigstens eine Kennwert vorzugsweise unter Berücksichtigung eines Materialhärte-Bereiches, der die Materialhärte des bearbeiteten Untergrundes beinhaltet, ermittelt werden. Zusätzlich oder alternativ kann es auch vorgesehen sein, dass der Kennwert unter Berücksichtigung eines Abrasivitäts-Bereiches, der die Abrasivität des zu bearbeitenden Untergrundes beinhaltet, ermittelt wird. Es können also von dem zu bearbeitenden Feld beispielsweise Auswahlmessungen repräsentativ vorgenommen werden und dabei die Materialhärten und/oder Abrasivitäten bestimmt werden.

Im Bergbau werden üblicherweise von einem zu bearbeitenden Gebiet Proben entnommen, insbesondere Probebohrungen vorgenommen. Dabei werden dann die Proben untersucht und die Rohstoffparameter bestimmt. Diese Ergebnisse können gemäß einer Erfindungsalternative unmittelbar auch in dem erfindungsgemäßen Verfahren verwendet werden um daraus die Kennwerte/Materialeigenschaften zu Herleitung der Kennwerte zu ermitteln.

Denkbar ist es auch, dass der Maschinenbediener aus einer Liste verschiedener Untergrundkategorien, die für den aktuell zu bearbeitenden Untergrund geeignete Kategorie auswählen kann, und dass diesen Untergrund Kategorien die Materialeigenschaften zur Ermittlung des wenigstens einen Kennwertes zugeordnet sind. Hierdurch kann der Maschinenbediener einfach vor Ort unter Berücksichtigung seines Erfahrungsschatzes den Untergrund beurteilen und eine entsprechende Auswahl vornehmen. Beispielsweise sind dieser Untergrundkategorie in einer Datenbank ein oder mehrere Kennwerte zugeordnet. Bei Auswahl der Untergrundkategorie werden diese Kennwerte dann aus der Datenbank ausgelesen und softwaremäßig verarbeitet, um die Restverschleißkapazität und damit die verbleibende Arbeitsleistung zu ermitteln. Dieses Verfahren hat den Vorteil, dass der Maschinenbediener die Restverschleißkapazität, beziehungsweise die verbleibende Arbeitsleistung vor Ort unmittelbar bestimmen kann und er auch, insbesondere beim Wechsel von Untergrundkategorien, eine Anpassung vornehmen kann.

Die Materialeigenschaften des zu bearbeitenden Untergrundes werden erfindungsgemäß indirekt erfasst. Hierbei ist vorgesehen, dass während des Arbeitsbetriebes die Materialeigenschaften zur Ermittlung des wenigstens einen Kennwertes anhand von Maschinenparametern ermittelt werden. Beispielsweise kann die Frästiefe, der Maschinenvorschub, die Drehzahl der Fräswalze, das an den Bearbeitungswerkzeugen anliegende Drehmoment und/oder der vom Antriebsmotor aktuell abgegebene Leistung ermittelt werden. Diese Maschinenparameter geben einen Rückschluss auf die Materialeigenschaften, insbesondere die Abrasivität oder die Härte des zu bearbeitenden Untergrundes. Die Drehzahl, das Drehmoment und die abgegebene Leistung können unmittelbar der elektronischen Motorsteuerung (ECU) des Antriebsmotors entnommen werden kann. Die ersten beiden Parameter können von der Maschinensteuerung bereitgestellt werden.

Eine besonders bevorzugte Erfindungsvariante ist derart, dass zunächst der aktuelle Verschleißzustand und die Restverschleißkapazität ermittelt werden, und dass danach die erbrachte Arbeitsleistung der Bodenbearbeitungsmaschine, insbesondere die Fräsleistung und/oder die während dieses Arbeitsprozesses auftretenden Maschinendaten überwacht werden. Dann kann zumindest näherungsweise der tatsächliche Verschleißzustand des Bodenbearbeitungswerkzeuges während des Arbeitsprozesses kontinuierlich ermittelt, beispielsweise errechnet werden. Wenn nun beispielsweise ein Wechsel der Untergrundkategorie auftritt oder eine neue Bearbeitungsaufgabe in Angriff genommen wird, dann kann dieser zuletzt ermittelte tatsächliche Verschleißzustand als aktueller Verschleißzustand im Sinne der Erfindung herangezogen werden und daraus dann die für die anstehende Aufgabe verfügbare Restverschleißkapazität ermittelt werden.

Erfindungsgemäß ist eine Recheneinheit vorgesehen, der eine Speichereinheit zugeordnet ist. In der Speichereinheit ist der eine oder sind die mehreren Kennwerte oder die Verrechnung der Kennwerte gespeichert. Mit einer Erfassungseinrichtung wird der aktuelle Verschleißzustand erfasst. Mittels der Recheneinheit wird unter Verwendung des aktuellen Verschleißzustandes, der daraus resultierenden Restverschleißkapazität und dem oder den Kennwerten oder der Verrechnung daraus, die verbleibende Arbeitsleistung bis zum Erreichen der Verschleißgrenze der Bodenbearbeitungswerkzeuge ermittelt. Dabei kann anhand des Verschleißzustandes und der Referenzkontur in der Recheneinheit die Restverschleißkapazität ermittelt werden Die Recheneinheit und/oder die Speichereinheit kann/können dabei beispielsweise der Bodenbearbeitungsmaschine unmittelbar zugeordnet sein. Denkbar ist es aber auch, dass die Recheneinheit und/oder die Speichereinheit einer separaten Systemeinheit zugeordnet ist/sind. Wenn eine separate Zuordnung vorgesehen ist, dann kann die Bodenbearbeitungsmaschine mit der Systemeinheit über eine vorzugsweise drahtlose Datenfernübertragungsstrecke miteinander in Verbindung stehen. Abhängig von dem Aufstellungsort der Bodenbearbeitungsmaschine kann diese sich dann mit relevanten Parametern versorgen lassen, insbesondere die Restverschleißkapazität und/oder die verbleibende Arbeitsleistung übermitteln lassen. Dies hat unter anderem auch den Vorteil, dass wenn in einem Arbeitsgebiet mehrere Bodenbearbeitungsmaschinen eingesetzt sind, diese sich individuell jeweils die erforderlichen Daten von der Systemeinheit abrufen können.

Die Kennwerte können in der Rechen-/Speichereinheit in Abhängigkeit vom Ort abgelegt sein. Beispielsweise kann eine Karte bspw. einer Mine hinterlegt sein, bei der verschiedenen Orten verschiedene Kennwerte zugeordnet sind. Die Maschine könnte über GPS verfügen, oder der Bediener gibt ein wo er sich befindet und die entsprechenden Kennwerte werden verwendet. Darüber hinaus könnten (besonders bei einer externen Recheneinheit) auch lediglich die Materialeigenschaften hinterlegt sein und die Kennwerte von der Maschine selbst anhand dieser Materialeigenschaften ermittelt werden.

Vor Erreichen der Verschleißgrenze des Bodenbearbeitungswerkzeuges kann ein Techniker zur Wartungsdurchführung informiert werden. Dabei kann unter Berücksichtigung der ermittelten Restverschleißkapazität eine Prognose über die verbleibende Fräsleistung erstellt werden. Rechtzeitig bevor diese Fräsleistung vollständig erbracht wurde, kann eine Wartungseinheit informiert werden. Dies kann beispielsweise automatisiert mittels einer Signalisierungseinrichtung der Bodenbearbeitungsmaschine erfolgen. Diese Signalisierungseinrichtung gibt ein entsprechendes Signal ab, das vorzugsweise drahtlos an eine Wartungsstation übermittelt werden kann. Die bis zum Erreichen der Verschleißgrenze des Bodenbearbeitungswerkzeuges verbleibende Arbeitsleistung der Bodenbearbeitungsmaschine kann in Form der noch fräsbaren Strecke, des noch fräsbaren Volumens bzw. der noch fräsbaren Masse und/oder der Reststandzeit signalisiert werden. Denkbar ist es beispielsweise, dass bei einer Bodenbearbeitungsmaschine vor Aufnahme eines geplanten Arbeitsprozesses die Restverschleißkapazität des Bodenbearbeitungswerkzeuges ermittelt wird. In Abhängigkeit des prognostizierten Verschleißes für die Fräsaufgabe können dann bereits im Voraus bei diesem Arbeitsprozess die Wartungsintervalle prognostiziert bzw. optimiert werden.

Während zur Ermittlung der verbleibenden Arbeitsleistung die Materialkennwerte und die Restverschleißkapazität berücksichtigt werden, wird nun umgekehrt mit den Materialeigenschaften und der verbleibenden Arbeitsleistung der zu erwartenden Meißelwechsel ermittelt.

Die Erfindung wird im Folgenden anhand eines in den Zeichnungen dargestellten Ausführungsbeispieles näher erläutert. Es zeigen:
- Fig. 1: in Seitenansicht einen Meißel, nämlich einen Rundschaftmeißel für eine Straßenfräsmaschine, einer Bergbaumaschine, einen Surface Miner oder dergleichen, der in den Halter eines Wechselhalterwerkzeugs für derartige Maschinen eingesetzt ist;
- Fig. 2: den Meißelkopf des Meißels gemäß Fig. 1 dargestellt in einem Diagramm;
- Fig. 3 bis 7: verschiedene Verschleißzustände des Meißelkopfes in einem Diagramm;
- Fig. 8: in schematischer Darstellung und Seitenansicht eine Fräsmaschine;
- Fig. 9: eine Fräswalze der Fräsmaschine gemäß Fig. 8 mit einer beispielhaften Vermessungseinrichtung beruhend auf dem Prinzip der Triangulation,
- Fig. 10: die Fräswalze gemäß Fig. 9 mit einer alternativen Ausgestaltung der Vermessungseinrichtung beruhend auf einem Schattenwurfverfahren und
- Fig. 11: eine Prinzipdarstellung einer Arbeitssituation mit zwei Fräsmaschinen.

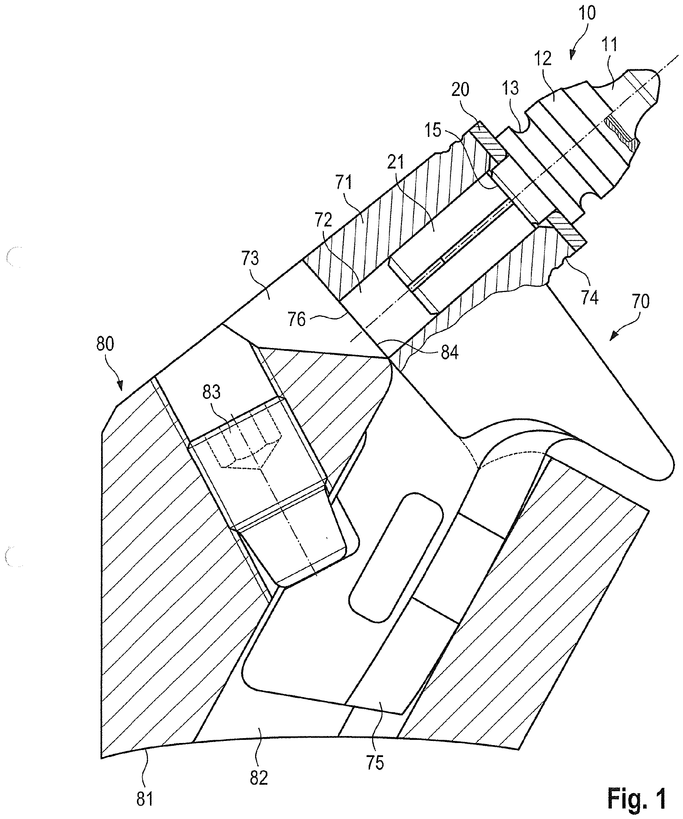

Die Fig. 1 zeigt beispielhaft als Bodenbearbeitungswerkzeug einen Meißel 10, wie er aus dem Stand der Technik bekannt und beispielhaft in der DE 38 18 213 A1 beschrieben ist. Der Meißel 10 weist einen Meißelkopf 12 und einen daran einteilig angeformten Meißelschaft 15 auf. Der Meißelkopf 12 trägt eine Meißelspitze 11, bestehend aus einem Hartwerkstoff, beispielsweise aus Hartmetall.

Diese Meißelspitze 11 ist üblicherweise mit dem Meißelkopf 12 entlang einer Kontaktfläche verlötet. In den Meißelkopf 12 ist eine umlaufende Ausziehnut 13 eingearbeitet. Diese dient derart als Werkzeugaufnahme, dass ein Demontagewerkzeug angesetzt und der Meißel 10 aus einem Meißelhalter 70 demontiert werden kann.

Der Meißelschaft 15 trägt eine längs geschlitzte zylindrische Spannhülse 21. Diese ist in Richtung der Längserstreckung des Meißels 10 unverlierbar, jedoch in Umfangsrichtung frei drehbar am Meißelschaft 15 gehalten. Im Bereich zwischen der Spannhülse 21 und dem Meißelkopf 12 ist eine Verschleißschutzscheibe 20 angeordnet. Im montierten Zustand stützt sich die Verschleißschutzscheibe 20 auf einer Gegenfläche eines Meißelhalters 70 und dem Meißelhalter 70 abgekehrt an der Unterseite des Meißelkopfes 12 ab.

Der Meißelhalter 70 ist mit einem Ansatz 71 ausgestattet, in den eine Meißelaufnahme 72 in Form einer zylindrischen Bohrung eingearbeitet ist. In dieser Meißelaufnahme 72 ist die Spannhülse 21 mit ihrem Außenumfang an der Bohrungsinnenwandung geklemmt gehalten. Die Meißelaufnahme 72 mündet in eine Austreiböffnung 73. Durch diese kann zum Zweck der Demontage des Meißels 10 ein Austreibdorn (nicht gezeigt) eingeführt werden. Dieser wirkt derart auf das Ende des Meißelschaftes 15 ein, dass unter Überwindung der Spannkraft der Spannhülse 21 der Meißel 10 aus der Meißelaufnahme 72 ausgeschoben wird.

Wie die Fig. 1 erkennen lässt, ist der Ansatz 71 in einem zylindrischen Bereich unterhalb der Verschleißschutzscheibe 20 mit zwei umlaufenden Nuten versehen. Diese Nuten dienen als Verschleißmarkierungen 74. Während des Betriebseinsatzes rotiert die Verschleißschutzscheibe 20 und kann dabei auf der Auflagefläche des Ansatzes 71 Verschleiß (Meißelhalterverschleiß) bewirken. Wenn die Auflagefläche soweit abgearbeitet ist, dass die zweite Verschleißmarkierung erreicht ist, gilt der Meißelhalter 70 als derart abgenutzt, dass er ausgewechselt werden muss.

Der Meißelhalter 70 weist einen Steckansatz 75 auf, der in eine Steckaufnahme 82 eines Basisteils 80 einführbar und dort mittels einer Spannschraube 83 geklemmt werden kann.

Die Spannschraube 83 presst dabei eine Anlagefläche 76 des Meißelhalters 70 auf eine Stützfläche 84 des Basisteils 80. Das Basisteil 80 selbst ist, wie in der Fig. 1 nicht weiter dargestellt, über seine Unterseite 81 auf das Fräswalzenrohr einer Fräswalze aufgeschweißt.

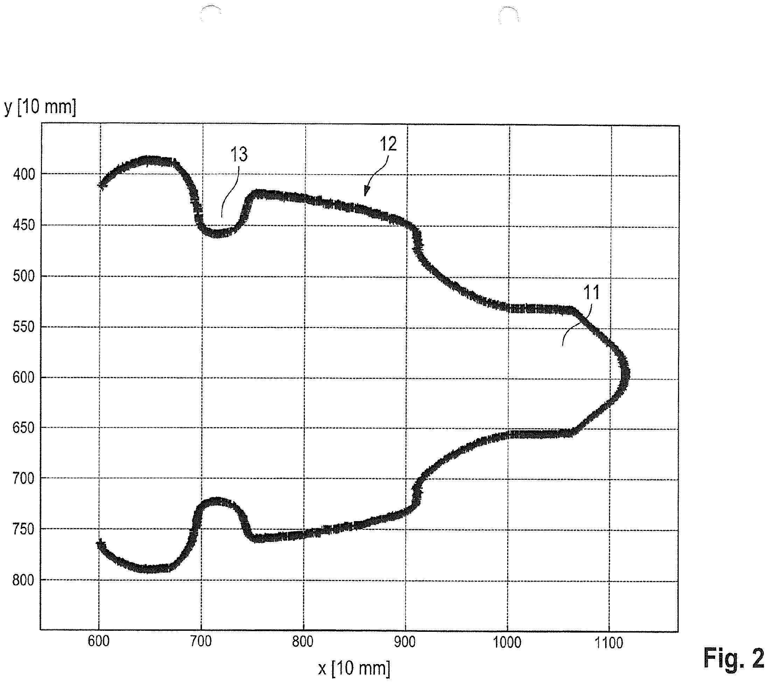

Zur Ermittlung des aktuellen Verschleißzustandes des am Meißelhalter montierten Meißels 10 wird eine berührungslose Vermessung des Meißelkopfes 12 vorgenommen. Dabei wird ein festgelegter Punkt oder werden mehrere Punkte des Meißelkopfes 12 als Positionswert gemessen/ ermittelt. Die Fig. 2 zeigt die Kontur eines unverschlissenen Meißelkopfes 12 in Seitenansicht. Diese Kontur ist in einem Diagramm veranschaulicht, wobei die Erstreckung des Meißelkopfes 12 in Richtung der Meißellängsachse des Meißels 10 (x-Achse) über der Erstreckung in Breitenrichtung (senkrecht zur Mittellängsachse, d. h. y-Achse) aufgetragen ist. Die Kontur des Meißelkopfes 12 (inklusive Meißelspitze 11) wird durch eine Vielzahl von gemessenen Punkten zusammengesetzt, wobei die linienförmige Begrenzung (Konturlinie) eine Interpolation dieser Positionswerte darstellt.

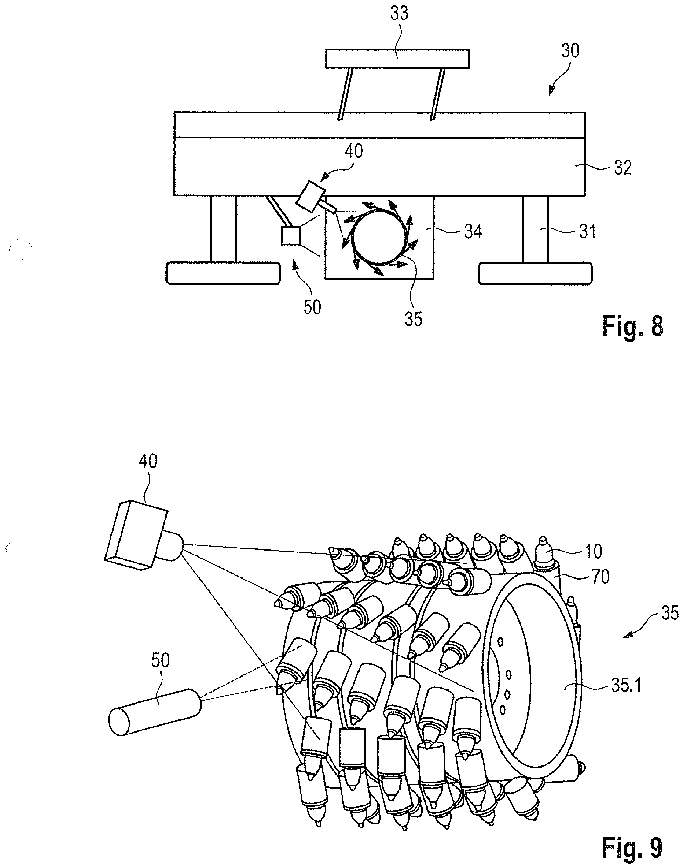

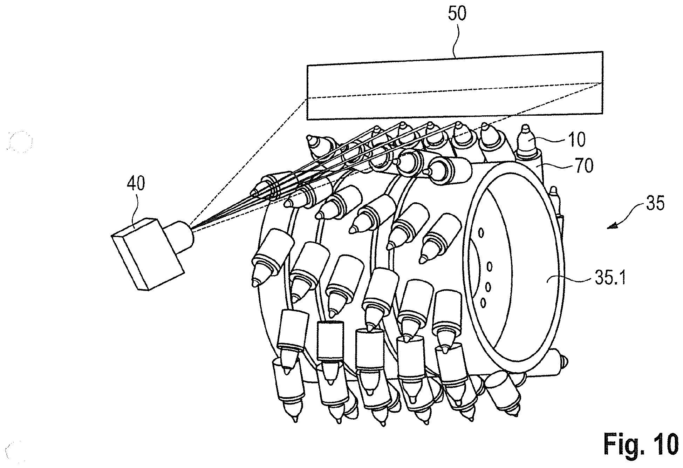

Die Vermessung an einer Fräswalze 35 (siehe Fig. 9 und 10) kann dann vorgenommen werden, wenn der Meißel 10 im unverschlissenen, verschlissenen oder teilverschlissenen Zustand vorliegt. Dann können diese Punkte, die errechnete Meißelkopf-Kontur oder aber auch nur ein einzelner Messpunkt erfasst und als Referenzwert in einer Speichereinheit abgespeichert werden.

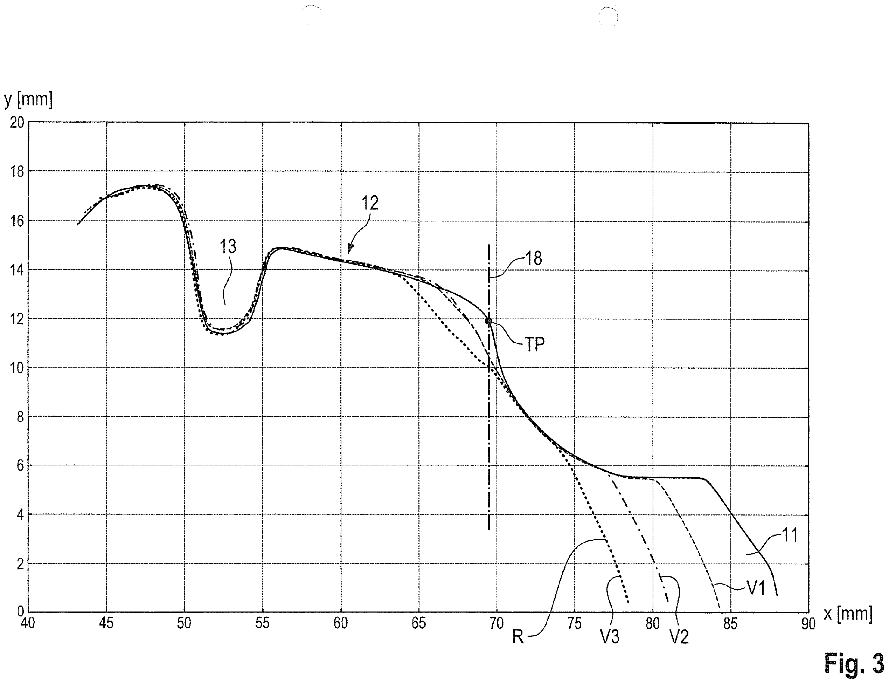

Die Fig. 3 zeigt nun verschiedene Messbilder eines Meißels 10. Dabei sind der Meißelkopf 12 im unverschlissenen Zustand sowie drei gemessene Verschleißzustände V1 bis V3 dargestellt. Der Verschleißzustand V3 stellt den Zustand dar, in dem der Meißel 10 für eine weitere Bearbeitung nicht mehr geeignet ist und getauscht werden muss. Durch Vergleich des Referenzwertes (Kontur im unverschlissenen Zustand) mit der jeweils gemessenen aktuellen Meißelkopfkontur (Verschleißzustände V1, V2 oder V3) die den Positionswert wiedergeben, lässt sich der Verschleiß ermitteln.

Die Konturen müssen zueinander ausgerichtet werden. Durch den Halterverschleiß, oder sonstige Fehlerursachen, befinden sich unverschlissene Konturbereiche nicht notwendigerweise an den gleichen Absolutpositionen (beziehungsweise Relativpositionen zur Walzendrehachse). Um die Konturen zueinander ins Verhältnis zu setzen, benötigt man wieder Referenzmerkmale, die eindeutig identifizierbar sind, im unverschlissenen und verschlissenen Zustand auftauchen und damit eine Ausrichtung und ausschließende Auswertung gestatten. Als Referenzmerkmale können die Ausziehnut 13, die Verschleißmarkierungen 74, die Verschleißschutzscheibe 20 oder andere markante Bereiche dienen, die einem geringen oder keinem Verschleiß unterliegen.

Wie die Fig. 3 veranschaulicht, nimmt die Länge des Meißelkopfes 12 während des Betriebseinsatzes ab. Durch Differenzbildung der Konturlinien in einer Schalteinheit, lässt sich eine Aussage über den Verschleißzustand generieren, die dem Benutzer beispielsweise in einer Anzeigeeinheit visualisiert wird. Anstatt der Vermessung der gesamten Kontur des Meißelkopfes 12, lässt sich auch nur ein Teil der Kontur oder ein einzelner Punkt, insbesondere das vordere Ende der Meißelspitze 11 als Positionswert erfassen. Eine weitere Detaillierung der Verschleißaussage lässt sich erreichen, wenn getrennt der Verschleiß der Meißelspitze 11 und des Meißelkopfes 12 (ohne Meißelspitze 11) erfasst wird.

Dies ist mit der a priori bekannten Position der Anbindung (Anbindungspunkt TP/ Anbindungslinie 18) der Meißelspitze 11 an den Meißelkopf 12 im unverschlissenen Zustand einfach möglich.

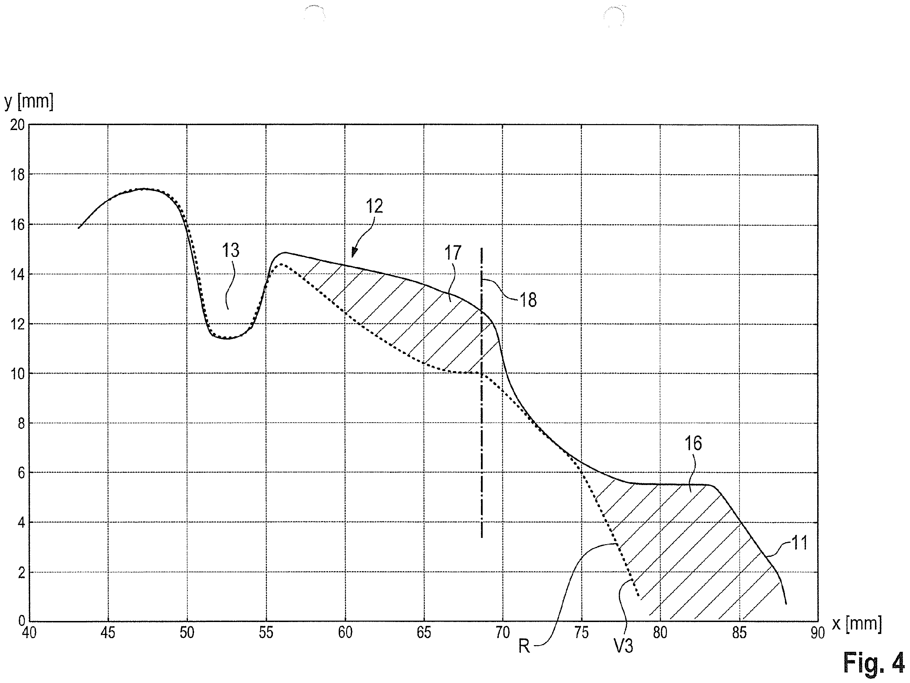

Wenn die gemessenen Verschleißzustände V1 bis V3 der unverschlissenen Kontur des Meißelkopfes 12, wie in Fig. 2 gezeigt, überlagert sind, dann kann durch Integration der gemessenen Konturen entlang der x-Achse das Gesamtverschleißvolumen ermittelt werden. In der Fig. 4 ist das Verschleißvolumen mit schraffierten Flächen gezeigt.

Demnach kann als Positionswert das Verschleißvolumen mit einem Referenzwert verglichen werden. Der Referenzwert kann dabei von einem funktionellen Zusammenhang oder einem Kennfeld gebildet sein, wobei unterschiedliche Verschleißvolumina mit zugeordneten Verschleißzuständen korreliert sind (beispielsweise a mm³ Verschleißvolumen entspricht b% Verschleiß). Aus der a priori bekannten Position des Anbindungspunktes TP/ Anbindungslinie 18 kann dann auch über Differenzbildung getrennt der Spitzenverschleiß 16 und der Kopfverschleiß 17 ermittelt werden. Diese Verschleißerkennung gibt dem Nutzer beispielsweise eine qualitative Aussage darüber, ob der Meißel 10 noch für bestimmte Fräsaufgaben geeignet ist. So kann ein Meißel, der seine Verschleißgrenze zwar noch nicht erreicht hat, aber einen gewissen Spitzenverschleiß aufweist, zum Beispiel nicht mehr für Feinfräsarbeiten verwendet werden.

Bei den Verfahren gemäß Fig. 3 und 4 werden die gemessenen Positionswerte den Referenzwerten überlagert. Während des Bearbeitungsprozesses verschleißt nicht alleine nur der Meißelkopf 12, sondern auch der Meißelhalter. Dieser arbeitet sich in Richtung der Mittellängsachse des Meißels 10 ab. Die isolierte Ermittlung des Längenverschleißes des Meißelhalters in dieser Richtung gelingt nun einfach dadurch, dass das Maß der notwendigen Verlagerung des Positionswertes in den Referenzwert um die in den Fig. 3 und 4 angegebene Überlagerungen zu erhalten (Verschiebung des Meißelkopfes 12 in Richtung der x-Achse, bis z. B. die Ausziehnuten der einzelnen Verschleißzustände deckungsgleich sind) eine absolute Verschleißgröße des Meißelhalters bildet. Die Gesamtverlagerung der Meißelspitze 11 abzüglich dieser Verschleißgröße gibt dann getrennt den Meißelverschleiß an.

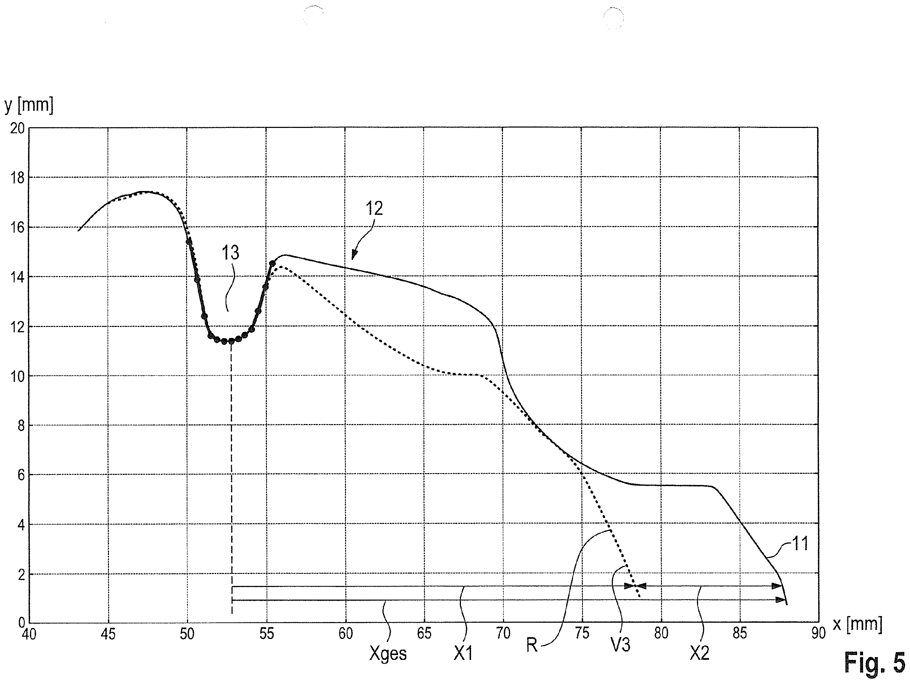

In der Fig. 5 ist eine Verfahrensvariante gezeigt, bei der eine Verschleißaussage anhand der Vermessung eines eindeutig identifizierbaren Merkmals auf dem Meißel getroffen wird. Das Merkmal bzw. die Umgebung dieses Merkmals soll dabei keinem oder nur geringem Verschleiß unterworfen sein. Gemäß Fig. 5 wird als eindeutiges Merkmal und Bezugskriterium die Ausziehnut 13, ein Teil der Ausziehnut 13 oder ein Punkt (beispielsweise der Nutgrund) der Ausziehnut 13 verwendet.

Weiterhin wird nun von diesem Merkmal der Abstand zur Position des freien Endes der Meißelspitze 11 (Positionswert) ermittelt. Auf diese Weise lässt sich dann auf einfache Weise der Längenverschleiß ermitteln. Wenn die Position der Meißelspitze 11 bekannt ist, kann dann wieder, wie oben beschrieben, auch der Meißelhalterverschleiß bestimmt werden. Alternativ oder zusätzlich kann wie bei Fig. 4 vorgegeben auch der Volumenverschleiß bzw. die zugeordneten Verschleißlängen (X₁ (aktuell gemessene Länge des teilverschlissenen Meißels), X₂ (verschlissenen Länge) bzw. X ges (Gesamtlänge des unverschlissenen Meißels) ermittelt werden.

Die Relativmessung unter Verwendung eines eindeutig identifizierbaren Merkmales als Bezugspunkt hat den Vorteil, dass eine Verschleißerkennung auch dann vorgenommen werden kann, wenn eine Referenzmessung nicht vorliegt, weil zum Beispiel die Länge des getauschten Meißels 10 oder der Verschleißzustand des Meißels 10 beziehungsweise Meißelhalters nicht bekannt ist.

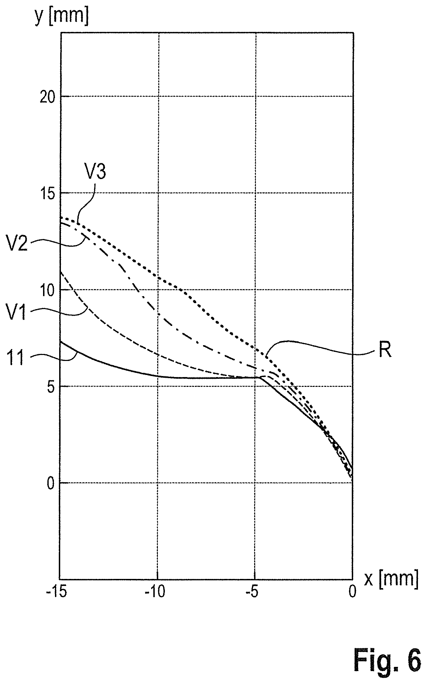

Fig. 3 zeigt die Änderung der Meißelkopfkontur für zunehmenden Verschleiß. Man erkennt die abnehmende Länge des Meißelkopfes 12. Verschiebt man die gemessenen Meißelkopfkonturen jeweils in den Punkt der maximalen Länge des Meißels 10 (Fig. 6), so erkennt man den zunehmenden Verschleißzustand des Meißels 10 zum einen an dem sich ändernden Kopfwinkel (der Winkel wird mit zunehmendem Meißelverschleiß flacher) und zum anderen am zunehmenden Volumen des Meißelkopfes 12, wenn man von der jeweiligen Spitze aus über eine bestimmte Länge hin die Fläche unter der Konturkurve integriert. Es lässt sich somit ein funktioneller Zusammenhang zwischen dem Kopfvolumen /-fläche und der absoluten Meißellänge für einen bestimmten Meißeltyp zum Beispiel mittels a priori durchgeführter Versuche zur Ermittlung der Referenzwerte herstellen.

Ist dieser Zusammenhang bekannt, kann durch Messung/ Integration des jeweilig aktuellen Kopfvolumens die Länge des Meißels 10 ermittelt werden. Dieses Verfahren setzt allerdings voraus, dass die Meißelspitze 11 einen mit der Meißellängsrichtung zunehmenden Querschnitt aufweist. Der Integrationsweg wird vorzugsweise so festgelegt, dass auch bei ganz verschlissenen Meißeln 10 nicht bis in den Kopfbereich hinein integriert wird, da Kopfauswaschungen das Ergebnis verfälschen.

Dieses Verfahren hat den Vorteil, dass kein Referenzpunkt benötigt wird, der wenig Verschleiß unterliegt. Manchmal ist ein solcher Referenzpunkt nicht vorhanden oder sehr schlecht identifizierbar.

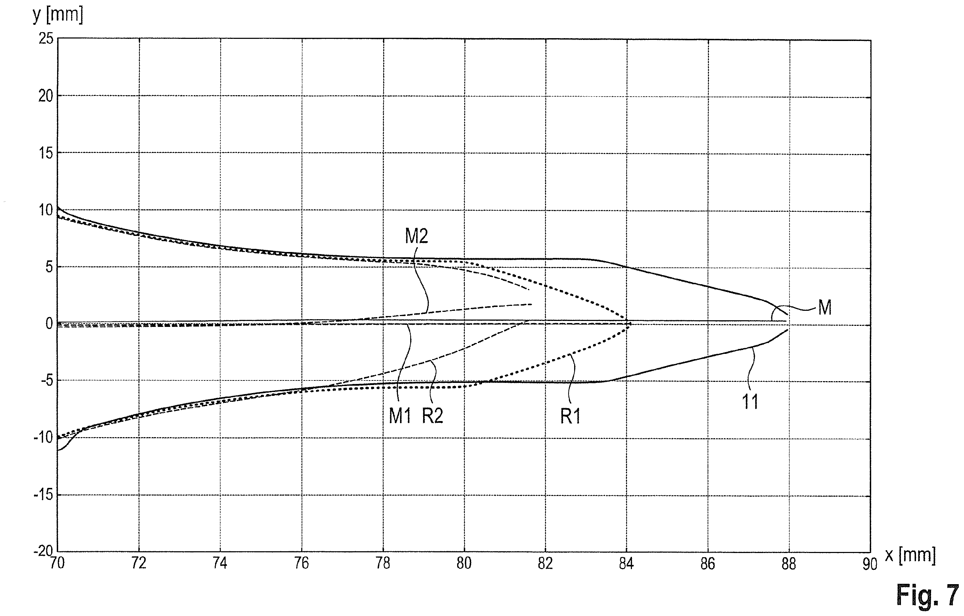

Zur Bestimmung des Asymmetriegrads des Verschleißes kann zum Beispiel der Mittelwert zwischen oberer und unterer Konturlinie gebildet werden. Fig. 7 zeigt die Konturlinien sowie deren Mittelwerte für eine neue, eine rotationssymmetrisch (R1) und eine nicht rotationssymmetrisch (R2) verschlissene Meißelspitze 11. Man erkennt, dass beim asymmetrisch verschlissenen Meißel 10 die Mittelinien M2 der beiden Konturlinien eine gewisse Neigung gegenüber der Meißellängsachse aufweist. Die Winkellage könnte einfach ausgewertet werden um den Asymmetriegrad des Verschleißes zu bestimmen. Es können aber auch direkt die Lage/ Abweichungen mehrerer Konturlinien bestimmt/ ermittelt werden.

Nach dem gleichen Verfahren kann ein asymmetrischer Verschleiß des Meißelkopfes 12 bestimmt werden. Üblicherweise wird jedoch ein asymmetrisch verschlissener Meißelkopf 12 einhergehen mit einer asymmetrisch verschlissenen Meißelspitze 11. Damit genügt eine Analyse der Meißelspitze 11.

In der Fig. 8 ist eine Fräsmaschine 30, beispielsweise ein Surface Miner, eine Straßenfräsmaschine oder dergleichen symbolisiert, bei der ein Maschinenkörper 32 von vier säulenartigen Fahreinheiten 31 getragen ist. Die Straßenfräsmaschine 30 kann ausgehend von einem Leitstand 33 bedient werden. In einem Fräswalzenkasten 34 ist eine Fräswalze 35 angeordnet.

Zur Vermessung des Verschleißzustandes nach einem der oben beschriebenen Verfahren ist eine Lichtquelle 50 und eine Kamera 40 der Fräswalze 35 zugeordnet. In der Fig. 9 ist die Fräswalze 35 deutlicher gezeigt. Auf der Oberfläche eines Fräsrohrs 35.1 der Fräswalze 35 sind eine Vielzahl von Meißelhalterwechselsystemen mit jeweils einem Meißelhalter 70 befestigt. In jedem Meißelhalter 70 ist ein Meißel 10 gehalten. Im vorliegenden Beispiel sind die Meißelhalter 70 unmittelbar auf die Fräswalze 35 aufgeschweißt.

Es ist jedoch auch der Einsatz des Meißelhalterwechselsystems gemäß Fig. 1 denkbar. Dann wird das Basisteil 80 auf die Fräswalze 35 aufgeschweißt.

Als Vorrichtung für die Vermessung der Meißelkonturen wird ein optisches System verwendet, bei dem in einer Art "Abscannvorgang" jeweils eine Höhenlinie der Walzenoberfläche vermessen wird. Als Messprinzip kann hier zum Beispiel ein Triangulationsverfahren eingesetzt werden, bei dem die Walzenoberfläche zum Beispiel durch eine Lichtquelle 50, beispielsweise eine Laserlinie beleuchtet wird. Wird die so erzeugte Laserlinie von einer Kamera 40 unter einem anderen Winkel betrachtet, so ergeben sich Höhenunterschiede auf der Walzenoberfläche (zum Beispiel durch die Meißel 10) als Verschiebungen dieser Projektionslinien. Bei bekanntem Differenzwinkel zwischen Kamera 40 und Lichtquelle 50 können die Höhenkoordinaten berechnet werden. Durch Drehen der Fräswalze 35 kann so ein Höhenprofil der Walzenmantelfläche erstellt werden, aus dem dann die Konturlinie der einzelnen Meißel 10 herausgelesen werden kann. Ein weiteres optisches Messprinzip für Vermessung der Höhe und/oder Geometrie der Meißel 10 ist das Schattenwurfverfahren gemäß Fig. 10. Bei diesem Verfahren wird die Tatsache ausgenutzt, dass die durch einen von einer Lichtquelle 50 erzeugten Lichtvorhang sich bewegenden Meißel 10 eine Schattenkontur erzeugen, die von einer Kamera 40 beobachtet und ausgewertet werden kann. Der große Vorteil dieses Verfahrens liegt in der Tatsache begründet, dass mit einer einzigen Kamerazeile gearbeitet werden kann, vom Prinzip wie bei einem Dokumentenscanner. Dadurch können insbesondere auch Fräswalzen 35 mit großem Durchmesser und hohen Drehgeschwindigkeiten mit einer hinreichenden Auflösung vermessen werden.

Das mit Bezug auf Fig. 10 beschriebene Verfahren kann gemäß einer alternativen Ausgestaltungsvariante der Erfindung abgewandelt werden. Dabei wird wieder mit der Lichtquelle 50 ein Lichtvorhang in Form einer Lichtebene erzeugt. Diese Lichtebene verläuft parallel zur Mittellängsachse der Fräswalze 35 und tangential zur Walzenoberfläche. Dabei ist die Lichtebene so ausgerüstet, dass bei drehender Fräswalze 35 die Meißelspitzen der Meißel 10 zunächst durch die Lichtebene durchtauchen.

Sie werfen dann einen von der Kamera 40 erfassbaren Schatten. Über einen gewissen Walzendrehwinkel werden die Meißel 10 über der Lichtebene geführt, bis sie dann wieder unter der Lichtebene abtauchen.

Bei unverschlissenen Meißeln 10/ Meißelhaltern 70 kann eine Referenzmessung vorgenommen werden. Dabei wird der Zeitpunkt des Durchtritts (Ein- oder Austritt) des Meißels 10 durch die Lichtebene erfasst und der zugehörige Drehwinkel der Fräswalze 35 erfasst. Nach einem Betriebeseinsatz wird nun eine korrespondierende Messung am teilverschlissenen (verschlissenen) Meißel 10 vorgenommen. Der Meißel 10 tritt aufgrund der Längenreduzierung gegenüber einem unverschlissenen System später durch die Lichtebene hindurch und taucht früher unter diese ab. Die korrespondierenden Drehwinkel der Fräswalze 35 können nun als Positionswert ermittelt werden. Diese Drehwinkel werden nun mit den Drehwinkeln am unverschlissenen System (Referenzwert) verglichen. Durch Differenzbildung kann nun aus dem Differenzwinkel eine Berechnung des Verschleißzustandes erfolgen oder es wird der Differenzdrehwinkel direkt als Verschleißkriterium herangezogen.

Zweckmäßiger Weise wird das Messsystem während des Fräsprozesses beispielsweise in Phasen, in denen nicht gemessen wird in einer entsprechenden Schutzvorrichtung verstaut. Bei Verwendung einer zweiten Kamera 40 kann zum Beispiel eine direkte Vermessung der Höhengeometrie ohne zusätzliche Beleuchtungsquelle vorgenommen werden.

Alternativ können durch entsprechende Anordnung einer zweiten Kamera zusätzliche Messungen der Konturen durchgeführt werden, so dass die Informationsdichte insgesamt gesteigert wird und die Detektionswahrscheinlichkeit für asymmetrische Verschleißzustände erhöht wird.

Alternativ kann die Position der Meißelspitze 11 beziehungsweise die Lage der Meißelkopfkontur in zumindest einem Schritt auch durch andere, abstandsmessende Sensorik (zum Beispiel Ultraschallsensorik, Näherungsschalter) erfasst werden.

Mit den vorbeschriebenen Messverfahren lässt sich nun, wie oben bereits ausführlich erläutert, folgendes ermitteln:
1. Der aktuelle Verschleißzustand V₁, V₂, V₃ eines Bodenbearbeitungswerkzeuges (Meißel 10)
2. Der Verschleiß durch Vergleich eines Referenzwertes (Meißel 10 im unverschlissenen oder teilverschlissenen Zustand) mit dem aktuellen Verschleißzustand V₁, V₂, V₃.

Damit der Verschleiß gemäß zu 2. entsteht muss die Bodenbearbeitungsmaschine eine gewisse Fräsleistung erbracht haben. Diese Fräsleistung kann gemessen werden, nämlich beispielsweise als gefräste Tonnenzahl (Fräsmasse), als Fräsvolumen und/oder als gefräste Wegstrecke etc. Die Ermittlung der Fräsleistung kann insbesondere direkt an einer Bodenbearbeitungsmaschine vorgenommen werden. Wenn die Bodenbearbeitungsmaschine mit einem vorbeschriebenen Meßsystem ausgestattet ist, so kann auch der Verschleiß (siehe 2.) direkt erfasst und in Verbindung mit der ermittelten Fräsleistung der oder die Kennwerte abgeleitet werden.

Auf der Basis des gemessenen aktuellen Verschleißzustandes V1, V2 und in Kenntnis der Verschleißgrenze V3 des Meißels 10 kann nun die Restverschleißkapazität des Meißels 10 ermittelt werden. Stellt beispielsweise das gemessenen freie Ende der Meißelspitze 11 gemäß Figur 5 als Positionswert den aktuellen Verschleißzustand dar, so kann durch Differenzbildung in x-Achsenrichtung der Abstand zu der den Verschleißzustand wiedergebenden Referenzkontur R und damit die Restverschleißlänge (Xges - X1) als Restverschleißkapazität ermittelt werden. Zusätzlich oder alternativ kann die Restverschleißkapazität als das noch verbleibende Restverschleißvolumen der Meißelspitze 11 bis zum Erreichen der Verschleißgrenze V3 ermittelt werden. Hierzu wird beispielsweise (siehe oben zu Fig 4) der gemessene Verschleißzustand V1, V2 der Meißelkontur der Referenzkontur R im verschlissenen Zustand V3 überlagert. Dann kann durch Integration entlang der x- Achse das Restverschleißvolumen ermittelt werden.

Die Änderung des Verschleißzustandes wird beeinflusst, durch Materialeigenschaften, beispielsweise die Härte und/oder die Abrasivität des gefrästen Materials. Die Materialeigenschaften werden indirekt erfasst. Es lassen sich in dem zu fräsenden Gebiet auch Proben (z.B. Probebohrungen) nehmen und auswerten.

Denkbar ist es auch, vorhandene Minen-Kategorisierungen zu verwenden. Für Minen werden allgemeine Härte-/Abrasivitätskategorien festgelegt (z.B. "hart, nicht abrasiv", "mittel, nicht abrasiv", "weich, abrasiv" etc. festgelegt). Aus diesen Kategorien kann die für die geplante Fahrstecke passende Kategorie ausgewählt werden.

Die Materialeigenschaften werden erfindungsgemäß durch Auswertung von Maschinendaten (z.B. Drehzahl der Fräswalze, Drehmoment, Vorschub und Frästiefe) ermittelt, da die Materialeigenschaften unmittelbar mit diesen Maschinendaten korrelieren.

In Abhängigkeit von der Fräsleistung und/oder den Materialeigenschaften lassen sich Kennwerte ermitteln. Diese Kennwerte geben an, welche Änderung des Verschleißzustandes bei einer bestimmten Fräsleistung und/oder bei vorgegebenen Materialeigenschaften zu erwarten ist.

Anhand der Restverschleißkapazität und unter Berücksichtigung eines oder mehrerer Kennwerte kann nun dem Maschinenführer die verbleibende Arbeitsleistung signalisiert werden. Beispielsweise kann ihm angegeben werden, welche Fräsleistung (z.B. Masse oder Volumen des noch fräsbaren Gutes, Anzahl der noch fräsbaren LKW-Ladungen, fräsbare Wegstrecke, oder Fräszeit) noch erbringbar ist. Wenn die Fräsleistung pro Zeiteinheit bei einer Bodenbearbeitungsmaschine bekannt ist, kann insbesondere auch die noch verbleibende Zeit bis zum nächsten Werkzeugwechsel angegeben werden. Die Fräsleistung pro Zeiteinheit kann anhand aktueller Maschinenparameter (Vorschub, Frästiefe) laufend ermittelt werden. Sie kann auch anhand von bereits durchgeführten Fräsarbeiten am selben Ort vorbekannt sein.

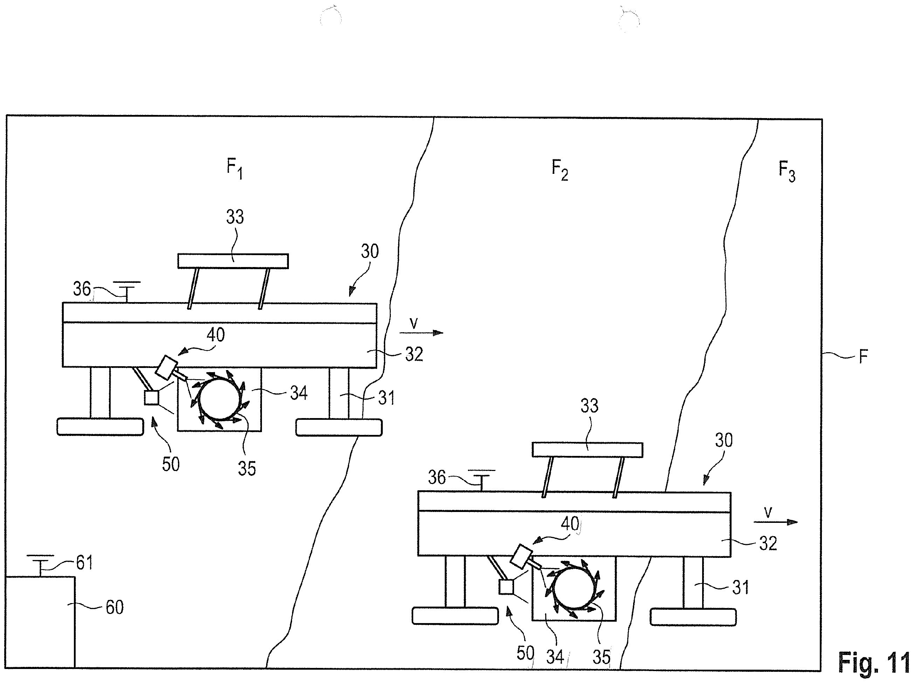

Fig. 11 veranschaulicht ein Fräsgebiet F, beispielsweise eine Mine in dem mehrere Fräsmaschinen 30 arbeiten. Das Fräsgebiet F beinhaltet ein Rohstoffvorkommen, wobei sich die Materialeigenschaften in Teilgebieten F₁, F₂, F₃ ändern.

Diesen Teilgebieten F₁, F₂, F₃ sind in Minenkarten Härte- und Abrasionskategorien zugeordnet (siehe oben). Vor Arbeitsbeginn ermittelt das Messsystem, beispielsweise die Kamera 40 den aktuellen Verschleißzustand V₁, V₂ und übermittelt diesen sowie die aktuelle Position der Maschine über eine Sende- und Empfangsvorrichtung 61 einer externen Systemeinheit 60. Dort wird unter Berücksichtigung der errechneten Restverschleißkapazität und eines oder mehrerer Kennwerte die verbleibende Fräsleistung bis zum Erreichen der Verschleißgrenze V3 ermittelt. Der Kennwert berücksichtigt dabei idealer Weise die geplante Fahrstrecke und die damit verbundenen unterschiedlichen Härte- und Abrasionskategorien in den Teilgebieten F₁, F₂, F₃ sowie den auf die Härte und Abrasionskategorien bezogenen, zu erwartenden Verschleiß. Die ermittelte Arbeitsleistung bis zum Erreichen der Verschleißgrenze V3 wird an die Fräsmaschine 30 zurücksignalisiert.

Die in Fig. 10 rechts dargestellte Fräsmaschine 30 hat bereits die Teilgebiete F₁ und F₂ überfahren und dabei Messwerte aufgenommen. Diese Messwerte können ausgewertet werden. Beispielsweise kann dabei erfasst werden, bei welcher Fräsleistung welcher Verschleiß auftritt. Dieses Ergebnis beziehungsweise die daraus resultierenden Kennwerte können nun der in Fig. 10 zweiten Fräsmaschine zur Verfügung gestellt werden um die Verschleißprognose qualitativ zu verbessern.

## Patentansprüche

1. Verfahren zur Verschleißprognose für eine Bodenbearbeitungsmaschine, insbesondere eine Straßenfräsmaschine (30), einen Surface Miner oder dergleichen,
wobei der aktuelle Verschleißzustand (V1, V2) wenigstens eines Bodenbearbeitungswerkzeuges der Bodenbearbeitungsmaschine, insbesondere eines Meißels und/oder eines Meißelhalters durch eine Erfassungseinrichtung erfasst wird,
wobei aus dem aktuellen Verschleißzustand eine Restverschleißkapazität bis zum Erreichen einer vorgegebenen Verschleißgrenze (V3) ermittelt wird, und wobei eine Recheneinheit vorgesehen ist,
**dadurch gekennzeichnet,**
**dass** wenigstens ein Kennwert unter Berücksichtigung der Materialeigenschaften des zu bearbeitenden Untergrunds ermittelt und in einer Speichereinheit gespeichert wird,
**dass** die Recheneinheit anhand des erfassten aktuellen Verschleißzustandes und des wenigstens einen Kennwerts die verbleibende Arbeitsleistung der Bodenbearbeitungsmaschine bis zum Erreichen der Verschleißgrenze (V3) des Bodenbearbeitungswerkzeuges ermittelt,
und **dass** die Materialeigenschaften zur Ermittlung des wenigstens einen Kennwertes während des Betriebes der Bodenbearbeitungsmaschine anhand von Maschinenparametern ermittelt werden.

2. Verfahren nach Anspruch 1,
**dadurch gekennzeichnet,**
**dass** der aktuelle Verschleißzustand (V1, V2) des Bodenbearbeitungswerkzeuges mit einem zumindest einen Teil des Bodenbearbeitungswerkzeuges im Verschleißzustand an der Verschleißgrenze (V3) wiedergebenden Referenzwert verglichen wird, um die Restverschleißkapazität zu ermitteln.

3. Verfahren nach Anspruch 1 oder 2,
**dadurch gekennzeichnet,**
**dass** der Verschleißzustand mehrerer oder aller Bodenbearbeitungswerkzeuge der Bodenbearbeitungsmaschinen ermittelt wird,
und **dass** das die geringste Restverschleißkapazität aufweisende Bodenbearbeitungswerkzeug zur Ermittlung der verbleibenden Arbeitsleistung bis zum Erreichen der Verschleißgrenze (V3) berücksichtigt wird.

4. Verfahren nach einem der Ansprüche 1 bis 3,
**dadurch gekennzeichnet,**
**dass** als verbleibende Arbeitsleistung die Fräsleistung, insbesondere die Masse des gefrästen Materials und/oder das Volumen des gefrästen Materials und/oder die verbleibende Strecke für die Bodenbearbeitungsmaschine und/oder die verbleibende Arbeitszeit für die Bodenbearbeitungsmaschine ermittelt wird.

5. Verfahren nach einem der Ansprüche 1 bis 4,
**dadurch gekennzeichnet,**
**dass** ein Arbeitsgebiet (F) festgelegt wird innerhalb dem eine oder mehrere Bodenbearbeitungsmaschinen eingesetzt sind,
**dass** von einer Bodenbearbeitungsmaschine der aktuelle Verschleißzustand (V1, V2) wenigsten eines Bodenbearbeitungswerkzeugs ermittelt und aus der bisher erbrachten Fräsleistung dieses wenigstens einen Bodenbearbeitungswerkzeugs und dem damit korrespondierenden Verschleiß des wenigstens einen Bodenbearbeitungswerkzeugs der wenigstens eine Kennwert oder die Verrechnung des einen oder der mehreren Kennwerte abgeleitet wird und
**dass** der/die Kennwert(e) oder auch die Verrechnung(en) an derselben und/oder zumindest einer weiteren Bodenbearbeitungsmaschine verwendet wird.

6. Verfahren nach einem der Ansprüche 1 bis 5,
**dadurch gekennzeichnet,**
**dass** die Materialeigenschaften zur Ermittlung des wenigstens einen Kennwertes während des Betriebes der Bodenbearbeitungsmaschine anhand von der Frästiefe und/oder des Vorschubes und/oder der Drehzahl der Fräswalze und/oder des aktuell am Bodenbearbeitungswerkzeug anliegenden Drehmoments und/oder der vom Antriebsmotor aktuell abgegebenen Leistung ermittelt werden und
**dass** der wenigstens eine Kennwert vorzugsweise unter Berücksichtigung der Abrasivität und/oder der Materialhärte des zu bearbeitenden Untergrunds ermittelt wird.

7. Verfahren nach einem der Ansprüche 1 bis 6,
**dadurch gekennzeichnet,**
**dass** der wenigstens eine Kennwert unter Berücksichtigung eines Materialhärte-Bereiches, der die Materialhärte des bearbeiteten Untergrundes beinhaltet, ermittelt wird und/oder eines Abrasivitäts-Bereiches, der die Abrasivität des zu bearbeitenden Untergrundes beinhaltet, ermittelt wird

8. Verfahren nach einem der Ansprüche 1 bis 7,
**dadurch gekennzeichnet,**
**dass** ein Maschinenbediener aus einer Liste verschiedener Untergrundkategorien die für den aktuell zu bearbeitenden Untergrund geeignete Kategorie auswählen kann und
**dass** diesen Untergrundkategorien die Materialeigenschaften, zur Ermittlung des wenigstens einen Kennwertes, zugeordnet sind.

9. Verfahren nach einem der Ansprüche 1 bis 8,
**dadurch gekennzeichnet,**
**dass** die Materialeigenschaften zur Ermittlung des wenigstens einen Kennwertes durch Probeentnahmen, insbesondere Probebohrungen ermittelt werden.

10. Verfahren nach einem der Ansprüche 1 bis 9,
**dadurch gekennzeichnet,**
**dass** der aktuelle Verschleißzustand (V1, V2) ermittelt wird, und
**dass** danach die erbrachte Arbeitsleistung der Bodenbearbeitungsmaschine, insbesondere die Fräsleistung überwacht werden, um den Verschleißzustand des Bodenbearbeitungswerkzeuges während des Arbeitsprozesses zu ermitteln.

11. Verfahren nach einem der Ansprüche 1 bis 10,
**dadurch gekennzeichnet,**
**dass** die Recheneinheit und/oder die Speichereinheit der Bodenbearbeitungsmaschine oder einer separaten Systemeinheit (60) zugeordnet ist.

12. Verfahren nach Anspruch 11,
**dadurch gekennzeichnet,**
**dass** die Bodenbearbeitungsmaschine und die Systemeinheit (60) über eine, vorzugsweise drahtlose Datenfernübertragungsstrecke miteinander in Verbindung stehen.

13. Verfahren nach einem der Ansprüche 1 bis 12,
wobei zur Wartung der Bodenbearbeitungsmaschine, vor Erreichen der Verschleißgrenze (V3) des Bodenbearbeitungswerkzeuges ein Techniker zur Wartungsdurchführung informiert wird.

14. Verfahren nach Anspruch 13,
**dadurch gekennzeichnet,**
**dass** die Bodenbearbeitungsmaschine oder eine mit der Bodenbearbeitungsmaschine in Kommunikationsverbindung stehende Systemeinheit (60) ein Signal generiert, das vorzugsweise drahtlos an den Techniker übermittelt wird.

15. Verfahren nach Anspruch 13 oder 14,
**dadurch gekennzeichnet,**
**dass** die bis zum Erreichen der Verschleißgrenze des Bodenbearbeitungswerkzeuges verbleibende Arbeitsleistung der Bodenbearbeitungsmaschine in Form der noch fräsbaren Strecke, des noch fräsbaren Volumens, der noch fräsbaren Masse und/oder der Reststandzeit signalisiert wird.

16. Verfahren nach einem der Ansprüche 13 bis 15
**dadurch gekennzeichnet,**
**dass** für einen geplanten Arbeitsprozess in Abhängigkeit des prognostizierten Verschleißes an den Bodenbearbeitungswerkzeugen bei diesem Arbeitsprozess, die Wartungsintervalle prognostiziert/optimiert werden.

## Claims

1. A method for wear prognosis for an earth working machine, in particular a road milling machine (30), a surface miner, or the like,
the current wear state (V1, V2) of at least one earth working tool of the earth working machine, in particular of a bit and/or a bit holder, being sensed by a sensing unit,
a residual wear capacity until a predefined wear limit (V3) is reached being ascertained from the current wear state,
and a calculation unit being provided,
**characterized**
**in that** at least one characteristic value is ascertained in consideration of the material properties of the substrate to be worked and stored in a memory unit; in that the calculation unit ascertains, based on the sensed current wear state and on the at least one characteristic value, the remaining working output of the earth working machine until the wear limit (V3) of the earth working tool is reached,
and **in that** the material properties for ascertaining the at least one characteristic value are ascertained during operation of the earth working machine on the basis of machine parameters.

2. The method according to Claim 1,
**characterized**
**in that** the current wear state (V1, V2) of the earth working tool is compared with a reference value reproducing at least a portion of the earth working tool in the worn state at the wear limit (V3), in order to ascertain the residual wear capacity.

3. The method according to Claim 1 or 2,
**characterized**
**in that** the wear state of several or of all earth working tools of the earth working machines is ascertained,
and **in that** the earth working tool exhibiting the least residual wear capacity is taken into account for ascertaining the remaining working output until the wear limit (V3) is reached.

4. The method according to one of Claims 1 to 3,
**characterized**
**in that** the milling output, in particular the mass of material milled and/or the volume of material milled and/or the remaining travel distance for the earth working machine and/or the remaining working time for the earth working machine, is ascertained as the remaining working output.

5. The method according to one of Claims 1 to 4,
**characterized**
**in that** a working area (F) within which two or more earth working machines are being used is defined,
**in that** the current wear state (V1, V2) of at least one earth working tool of an earth working machine is ascertained, and the at least one characteristic value or the derivation of the one or more characteristic values is derived from the previously produced milling output of said at least one earth working tool and from the wear, corresponding thereto, of the at least one earth working tool, and in that the characteristic value(s) or also the derivation(s) is/are used on the same and/or on at least one further earth working machine.

6. The method according to one of Claims 1 to 5,
**characterized**
**in that** the material properties for ascertaining the at least one characteristic value are ascertained during operation of the earth working machine on the basis of the milling depth and/or advance and/or milling drum rotation speed and/or torque currently applied to the earth working tool and/or power output currently being delivered by the drive engine,
and **in that** the at least one characteristic value preferably is ascertained in consideration of the abrasiveness and/or material hardness of the substrate to be worked.

7. The method according to one of Claims 1 to 6,
**characterized**
**in that** the at least one characteristic value is ascertained in consideration of a material hardness range that contains the material hardness of the substrate being worked and/or of an abrasiveness range that contains the abrasiveness of the substrate to be worked.

8. The method according to one of Claims 1 to 7,
**characterized**
**in that** a machine operator can select, from a list of different substrate categories, the category suitable for the substrate currently to be worked, and in that the material properties for ascertaining the at least one characteristic value are associated with said substrate categories.

9. The method according to one of Claims 1 to 8,
**characterized**
**in that** the material properties for ascertaining the at least one characteristic value are ascertained by sampling, in particular by sample boring operations.

10. The method according to one of Claims 1 to 9,
**characterized**
**in that** the current wear state (V1, V2) is ascertained,
and **in that** the working output produced by the earth working machine, in particular the milling output, is then monitored in order to ascertain the wear state of the earth working tool during the working process.

11. The method according to one of Claims 1 to 10,
**characterized**
**in that** the calculation unit and/or the memory unit are associated with the earth working machine or with a separate system unit (60).

12. The method according to Claim 11,
**characterized in that** the earth working machine and the system unit (60) are in mutual communication via a preferably wireless remote data transfer link.

13. The method according to one of Claims 1 to 12,
**characterized**
**in that** for the maintenance of the earth working machine, before the wear limit (V3) of the earth working tool is reached, a technician is informed so that maintenance can be carried out.

14. The method according to Claim 13,
**characterized**
**in that** the earth working machine or a system unit (60) in communication with the earth working machine generates a signal that is conveyed preferably wirelessly to the technician.

15. The method according to Claim 13 or 14,
**characterized**
**in that** the working output of the earth working machine remaining until the wear limit of the earth working tool is reached is signaled in the form of the distance that can still be milled, the volume that can still be milled, the mass that can still be milled, and/or the remaining service life.

16. The method according to one of Claims 13 to 15,
**characterized**
**in that** for a planned working process, the maintenance intervals are predicted/optimized as a function of the predicted wear on the earth working tools for that working process.

## Revendications

1. Méthode de prévision d'usure pour une machine de travail du sol, en particulier une fraiseuse routière (30), un Surface Miner ou similaire, l'état d'usure actuel (V1, V2) d'au moins un outil de travail du sol de la machine de travail du sol, en particulier d'un burin et/ou d'un porte-burin étant détecté par un dispositif de détection, une capacité d'usure résiduelle étant déterminée à partir de l'état d'usure actuel jusqu'à ce qu'une limite d'usure (V3) prédéterminée soit atteinte, et une unité de calcul étant prévue,
**caractérisée**
**en ce qu'**au moins une valeur caractéristique est déterminée en tenant compte des propriétés du matériau du sol à travailler et est enregistrée dans une unité de mémoire, en ce que l'unité de calcul détermine, à l'aide de l'état d'usure actuel détecté et de la au moins une valeur caractéristique, la capacité de travail restante de la machine de travail du sol jusqu'à ce que la limite d'usure (V3) de l'outil de travail du sol soit atteinte, et en ce que les propriétés du matériau pour déterminer la au moins une valeur caractéristique sont déterminées pendant le fonctionnement de la machine de travail du sol à l'aide des paramètres de la machine.

2. Méthode selon la revendication 1,
**caractérisée**
**en ce que** l'état d'usure actuel (V1, V2) de l'outil de travail du sol est comparé à une valeur de référence reproduisant au moins une partie de l'outil de travail du sol dans l'état d'usure à la limite d'usure (V3), afin de déterminer la capacité d'usure résiduelle.

3. Méthode selon la revendication 1 ou 2,
**caractérisée**
**en ce que** l'état d'usure de plusieurs ou de tous les outils de travail du sol des machines de travail du sol est déterminé, et en ce que l'outil de travail du sol présentant la capacité d'usure résiduelle la plus faible est pris en compte pour déterminer la capacité de travail restante jusqu'à ce que la limite d'usure (V3) soit atteinte.

4. Méthode selon l'une des revendications 1 à 3,
**caractérisée**
**en ce qu'**on détermine comme capacité de travail restante la puissance de fraisage, notamment la masse du matériau fraisé et/ou le volume du matériau fraisé et/ou la distance restante pour la machine de travail du sol et/ou le temps de travail restant pour la machine de travail du sol.

5. Méthode selon l'une des revendications 1 à 4,
**caractérisée**
**en ce qu'**une zone de travail (F) est définie à l'intérieur de laquelle une ou plusieurs machines de travail du sol sont utilisées, en ce que l'état d'usure actuel (V1, V2) d'au moins un outil de travail du sol et que, à partir de la puissance de fraisage fournie jusqu'à présent par cet au moins un outil de travail du sol et de l'usure correspondante de cet au moins un outil de travail du sol, on déduit l'au moins une valeur caractéristique ou le calcul de l'une ou de plusieurs valeurs caractéristiques et que la/les valeur(s) caractéristique(s) ou également le/les calcul(s) est/sont utilisé(s) sur la même et/ou au moins une autre machine de travail du sol.

6. Méthode selon l'une des revendications 1 à 5,
**caractérisée**
**en ce que** les propriétés du matériau pour déterminer l'au moins une valeur caractéristique sont déterminées pendant le fonctionnement de la machine de travail du sol à l'aide de la profondeur de fraisage et/ou de l'avance et/ou de la vitesse de rotation du tambour de fraisage et/ou du couple actuellement appliqué à l'outil de travail du sol et/ou de la puissance actuellement fournie par le moteur d'entraînement et en ce que l'au moins une valeur caractéristique est déterminée de préférence en tenant compte de l'abrasivité et/ou de la dureté du matériau du sol à travailler.

7. Méthode selon l'une des revendications 1 à 6,
**caractérisée**
**en ce que** l'au moins une valeur caractéristique est déterminée en tenant compte d'une plage de dureté du matériau, qui comprend la dureté du matériau du sol à travailler, et/ou d'une plage d'abrasivité, qui comprend l'abrasivité du sol à travailler.

8. Méthode selon l'une des revendications 1 à 7,
**caractérisée**
**en ce qu'**un opérateur de machine peut sélectionner la catégorie appropriée pour le sol à travailler actuellement à partir d'une liste de différentes catégories de sols, et en ce que les propriétés du matériau sont associées à ces catégories de sols, pour déterminer au moins une valeur caractéristique.

9. Méthode selon l'une des revendications 1 à 8,
**caractérisée**
**en ce que** les propriétés du matériau pour déterminer ladite au moins une valeur caractéristique sont déterminées par des prélèvements d'échantillons, notamment des forages d'essai.

10. Méthode selon l'une des revendications 1 à 9,
**caractérisée**
**en ce que** l'état d'usure actuel (V1, V2) est déterminé, et en ce qu'ensuite la puissance de travail fournie par la machine de travail du sol, en particulier la puissance de fraisage, est surveillée afin de déterminer l'état d'usure de l'outil de travail du sol pendant le processus de travail.

11. Méthode selon l'une des revendications 1 à 10,
**caractérisée**
**en ce que** l'unité de calcul et/ou l'unité de mémoire sont associées à la machine de travail du sol ou à une unité de système séparée (60).

12. Méthode selon la revendication 11,
**caractérisée**
**en ce que** la machine de travail du sol et l'unité de système (60) sont reliées entre elles par une liaison de télétransmission de données, de préférence sans fil.

13. Méthode selon l'une des revendications 1 à 12, dans laquelle, pour l'entretien de la machine de travail du sol, avant que la limite d'usure (V3) de l'outil de travail du sol ne soit atteinte, un technicien est informé de la réalisation de l'entretien.

14. Méthode selon la revendication 13,
**caractérisée**
**en ce que** la machine de travail du sol ou une unité de système (60) en liaison de communication avec la machine de travail du sol génère un signal qui est transmis, de préférence sans fil, au technicien.

15. Méthode selon la revendication 13 ou 14,
**caractérisée**
**en ce que** la capacité de travail restante de la machine de travail du sol jusqu'à ce que la limite d'usure de l'outil de travail du sol soit atteinte est signalée sous la forme de la distance pouvant encore être fraisée, du volume pouvant encore être fraisé, de la masse pouvant encore être fraisée et/ou de la durée de vie restante.

16. Méthode selon l'une des revendications 13 à 15,
**caractérisée**
**en ce que**, pour un processus de travail planifié, les intervalles d'entretien sont prévus/optimisés en fonction de l'usure prévue des outils de travail du sol lors de ce processus de travail.
